# EUROPÄISCHE PATENTSCHRIFT

(11) **EP 3 074 468 B1**
(45) Veröffentlichungstag und Bekanntmachung des Hinweises auf die Patenterteilung: **08.05.2019**
(21) Anmeldenummer: 14803142.0
(22) Anmeldetag: 27.11.2014
(51) Int. Cl.: C09C 1/30, C09C 3/00, C09C 3/06, C09C 3/08, C23C 18/34, B01J 13/02, C22C 30/00, C04B 41/82, C04B 41/88

(54) **VERFAHREN ZUR METALLBESCHICHTUNG VON ANORGANISCHEN PARTIKELN MITTELS STROMLOSER METALLABSCHEIDUNG**
PROCESS FOR METAL COATING OF INORGANIC PARTICLES BY MEANS OF ELECTROLESS METAL DEPOSITION
PROCÉDÉ DE REVÊTEMENT MÉTALLIQUE DE PARTICULES INORGANIQUES PAR DÉPÔT MÉTALLIQUE SANS COURANT

(30) Priorität: 29.11.2013 DE 102013224577
(43) Veröffentlichungstag der Anmeldung: 05.10.2016
(73) Patentinhaber: Technische Universität Dresden, 01062 Dresden (DE)
(72) Erfinder: MONDIN, Giovanni, 36034 Malo (IT); WISSER, Florian, 66386 St. Ingbert (DE); DÖRFLER, Susanne, 01309 Dresden (DE); KASKEL, Stefan,, 01159 Dresden (DE)
(74) Vertreter: Kailuweit & Uhlemann Patentanwälte Partnerschaft mbB
(86) Internationale Anmeldenummer: PCT/EP2014/075843
(87) Internationale Veröffentlichungsnummer: WO 2015/078983

(56) Entgegenhaltungen:
- WO-A2-2012/072658
- MOHAPATRA S ET AL: "Synthesis and stability of functionalized iron oxide nanoparticles using organophosphorus coupling agents", COLLOIDS AND SURFACES. A, PHYSICACHEMICAL AND ENGINEERING ASPECTS, ELSEVIER, AMSTERDAM, NL, Bd. 339, Nr. 1-3, 1. Mai 2009 (2009-05-01) , Seiten 35-42, XP026076566, ISSN: 0927-7757, DOI: 10.1016/J.COLSURFA.2009.01.009 [gefunden am 2009-01-23]
- MONDIN GIOVANNI ET AL: "Metal deposition by electroless plating on polydopamine functionalized micro- and nanoparticles", JOURNAL OF COLLOID AND INTERFACE SCIENCE, Bd. 411, 28. August 2013 (2013-08-28), Seiten 187-193, XP028733911, ISSN: 0021-9797, DOI: 10.1016/J.JCIS.2013.08.028 in der Anmeldung erwähnt
- CRISTINA TUDISCO ET AL: "Cyclodextrin Anchoring on Magnetic Fe 3 O 4 Nanoparticles Modified with Phosphonic Linkers", EUROPEAN JOURNAL OF INORGANIC CHEMISTRY, Bd. 2012, Nr. 32, 7. November 2012 (2012-11-07), Seiten 5323-5331, XP055169247, ISSN: 1434-1948, DOI: 10.1002/ejic.201200510

## Beschreibung

Die Erfindung beschreibt metallbeschichtete anorganische Partikel, und ein Verfahren zu deren Herstellung mittels stromloser Metallabscheidung. Die metallbeschichteten anorganischen Partikel können durch ihre verbesserten Oberflächeneigenschaften in Metallmatrizen eingebracht werden.

Gängige Methoden zur Abscheidung von Metallen auf der Oberfläche von Partikeln sind neben den teuren und komplizierten physikalischen Abscheidungsmethoden, wie z. B. PVD (*physical vapour deposition*) und Sputtering auch chemische Methoden, wie z. B. stromlose Abscheidung. Diese sind günstiger, einfacher und es können homogene/konformale Metallschichten erzeugt werden. Die bisherigen nasschemischen Methoden beruhen auf der so genannten Edelmetallpartikelbekeimung, bei der teure Precusoren eingesetzt werden und schwermetallhaltiger Abfall (z. B. Sn und Pd-Abfall) entsteht. Zusätzlich muss die Oberfläche der zu beschichtenden Spezies vorher aktiviert werden, damit das Metall, welches auf die Oberfläche gebracht werden soll, nicht parallel zu den Partikeln als eigenständige Metallpartikel ausfällt. Nachteilig ist außerdem, dass mit Hilfe dieser Methode keine homogene/konformale Metallschicht auf den Nanopartikeln nach der Metallabscheidung erzeugt wird, sondern lediglich partikuläre Morphologien erhalten werden. Die auf diesem Weg erhaltenen Oberflächeneigenschaften der Partikel sind entsprechend nicht ähnlich genug der der Matrix, so dass es beim Einbringen in die Metallmatrix mit höherer Wahrscheinlichkeit zur Entmischung oder Agglomeration der Partikel kommt. [S.S. Djokic, Electroless deposition of metalls and alloys, in B.E. Conway, R.E. White (Eds.), Modern Aspects of Electrochemistry, Vol. 35, Springer, US 2002, pp. 51-133; Z. Deng et al., J. Phys. chem. C2007, 111, 11692; R.L. Cohen et al., J. Electrochem. Soc. 1973, 120, 502]

J. Samuel et al. beschreiben ein Verfahren zur Herstellung von Metallclustern auf SiO₂-Nanopartikeln durch Autoreduktion. Die Metallclusterabscheidung fand nur statt, wenn die SiO₂-Nanopartikel sowohl mit Aminogruppen als auch mit Thiolgruppen modifiziert war. [Mater. Res Soc. Symp. Proc. 1207: 103-108]

US 2002/0132045 A1 und US 2003/0164064 A1 offenbaren Verfahren zur Herstellung einer Metall-Nanohülle auf speziell funktionalisierten SiO₂-Nanopartikeln. US 2003/0118657 offenbart die Verwendung von derart funktionalisierten Nanopartikeln zur Reduzierung oder Verhinderung der Neubildung von Blutgefässen (Vaskularisierung). EP 1 936 378 A1 offenbart mehrschichtige Nanopartikel mit einem magnetischen Kern, den eine SiO₂-Schicht umgibt, welche wiederum durch eine Goldschicht und ggf. zusätzliche Metallschichten umgeben ist. Als äußere Schicht sind auf den Nanopartikel Biosensormoleküle (wie z. B. Aptamere) immobilisiert. Die Herstellung der Metallschicht erfolgt in den Schriften jeweils, in dem die Silikat-Oberfläche zunächst mit einem Aminosilanlinker funktionalisiert wird und anschließend Gold-Kolloidpartikel gebunden werden. An die so modifizierte Oberfläche können anschließend andere Metalle reduktiv abgeschieden werden.

WO 2012/072658 A2 offenbart ein Verfahren zur Metallbeschichtung von Nanopartikeln mittels stromloser Abscheidetechniken. Die homogen metallbeschichteten Nanopartikel eignen sich insbesondere für die Verwendung als Füllstoffe in Metall-Matrix-Kompositen, wobei die abgeschiedene Metallschicht als Dispersionsvermittler zwischen nichtmetallischen Nanopartikeln und Metallmatrix fungiert.

Das Verfahren zur Herstellung von Nanopartikeln zur stromlosen Metallabscheidung umfasst die Schritte: a) Thiolfunktionalisierung der Oberfläche der Nanopartikel, b) Inkontaktbringen der Nanopartikel mit einer wässrigen Metallsalzlösung, c) Zugabe eines Reduktionsmittels, welches die Metallsalzlösung reduziert, wodurch es zu einer Metallabscheidung auf den Nanopartikeln kommt.

Die Thiolfunktionalisierung erfolgt dabei bei oxidischen Partikeln, Karbiden und anderen keramischen Partikeln durch ein Mercaptoorganylsilan, oder bei Kohlenstoffpartikeln durch ein Dithiol, Phosphorpentasulfid, Mercaptoorganylsilan, H₂S oder CS₂.

Nachteilig an dem Verfahren zur Metallbeschichtung von Nanopartikeln mittels stromloser Abscheidetechniken ist die Funktionalisierung der Oberfläche mittels verschiedener Mercaptoorganylsilane. Zum einen sind diese Verbindungen nicht kommerziell erhältlich und müssen über aufwendige Synthesen selbst hergestellt werden. Zum anderen neigen sie zur Eigenkondensation und erzeugen so auf der Oberfläche der Nanopartikel keine reinen Monolagen. Die Ausbildung von mehreren Lagen ist nachteilig, da bei einer späteren Verarbeitung der Partikel (z. B. in heißen Schmelzen) nur so wenig wie möglich organische Bestandteile enthalten sein sollten, da diese weniger stabil gegen Hitze/mechanische Belastung o.ä. sind und Gasblasen bzw. Inhomogenitäten in der Metallmatrix kommt.

Außerdem binden Organylsilane bzw. die durch die Eigenkondensation entstandenen Oligomere nicht chemisch an die Oberfläche von Übergangsmetallcarbiden, wie durch infrarotsprektroskopische Messungen nachgewiesen werden konnte.

Des Weiteren ist bei dieser Erfindung nachteilig, dass nur die Funktionalisierung von Partikeln im Nanogrößenbereich beschrieben wird. Außerdem kann nicht ausgeschlossen werden, dass Ormocere (Organicaly modified Ceramic) und andere oligomere Spezies des Organylsilanes unvollständig abgetrennt werden und daher ebenfalls mit Metall beschichtet werden. Diese metallbeschichteten Ormocere weisen ebefalls einen hohen organischen Anteil auf, was sich negativ auf das Einbringen in die Metallschmelze auswirken kann.

Mondin et al. belegen, dass mit Mercaptosilanen, wie beispielsweise (3-Mercaptopropyl)triethoxysilan (MPTES), modifizierte SiO₂- und Al₂O₃-Partikel, die anschließend mit beispielsweise Kupfer beschichtet wurden, keine reinen Monolagen aufweisen [G. Mondin et al. Electrochimica Acta 114, 2013, 521-526].

Da Phosphonate, Phosphorsäureester bzw. Carbonsäuren in verdünnten wässrigen Systemen nicht zur Eigenkondensation neigen, kann überschüssiges Phosphonat, Phosphorsäureester bzw. Carbonsäure einfach entfernt und gegeben Falls wieder recycelt werden.

Si et al. und Zhou et al. beschreiben Fe₃O₄ Nanopartikel, die mit Polydopamin beschichtet wurden. [J. Si, H. Yang, Mater. Chem. Phys. 128 (2011) 519, W.-H. Zhou, C.-H. Lu, X.-C. Guo, F.-R. Chen, H.-H. Yang, X.-R. Wang, J. Mater. Chem. 20 (2010) 880.]

Li et. al. beschreiben Fe₃O₄ Partikel, die mit Polydopamin beschichtet sind und zusätzlich mit Silber überzogen wurden. [Q. Li, M. Tian, L. Liu, H. Zou, L. Zhang, W.C. Wang, Electrochim. Acta 91 (2013) 114]

Wang et al. beschreiben die Beschichtung von 25 µm großen Siliziumdioxidartikeln mit Polydopamin und Silber. [W. Wang, Y. Jiang, Y. Liao, M. Tian, H. Zou, L. Zhang, J. Colloid Interface Sci. 358 (2011) 567]

Mondin et al. beschreiben ein Verfahren zur stromlosen Metallabscheidung auf polydopamin-funktionalisierten nano- und mikro-Partikeln. Zunächst wurden sowohl WC mikro-Partikel (0,1 - 100 µm Partikeldurchmesser) als auch Al₂O₃- nano-Partikel (0,1 - 100 nm Partikeldurchmesser) mit Polydopamin funktionalisiert. Auf den polydopaminfunktionalisierten WC Partikeln konnten erfolgreich Silber oder Kupfer abgeschieden werden. Die polydopaminfunktionalisierten Al₂O₃-Partikel konnten erfolgreich mit Kupfer beschichtet werden. [G. Mondin et al., J. Colloid Interface Sci. 411 (2013) 187]

Auch bei der Funktionalisierung der Partikel mittels Polydopamin ist es nachteilig, dass keine Monolage erhalten werden kann. Die Ausbildung von mehreren Lagen und damit vergleichsweise vieler organischer Bestandteile auf der Partikeloberfläche, ist wiederum nachteilig für eine spätere Verarbeitung (z. B. in heißen Schmelzen). Je höher der Anteil organischer Bestandteile ist, desto mehr gasförmige Abbauprodukte können beim Einbringen in die Schmelze entstehen, was zum Abplatzen der Metallbeschichtung führen kann.

Weiterhin offenbart **Mohapatra, S., *et.al.*** offenbart die Beschichtung von Eisenoxid-Nanopartikeln mit verschiedenen Phosphonsäuren. Dabei kann im Abschnitt 2.1.3. entnommen werden, dass die Nanopartikel in Wasser gelöst werden und die Phosphonsäure im 2,5-fachen Überschuss zugegeben und bei 37°C für 20 min mit Ultraschall behandelt werden. Die so erhaltenen Partikel weisen jedoch eine inhomogene Beschichtung auf [Mohapatra, S., et.al., Colloids and Surfaces. A, Physicachemical and Engineering Aspects, Elsevier, Bd. 339, Nr. 1-3, (2009-05-01), S. 35-42].

Schließlich offenbart **Tudisco, C., *et al*** ein Verfahren zur Funktionalisierung von Eisenoxid-Nanopartikeln mit Cyclodextrinen. Dabei erfolgt eine Funktionalisierung der Nanopartikel mit Phosphonsäurederivaten. Gemäß dem Schema 2 erfolgt die Anbindung über die Ausbildung von P-O-Fe-Bindungen. Als freie Gruppen verbleiben mithin die Aminofunktionalitäten, an denen nachfolgend die Cyclodextrine angebunden werden [Tudisco, C., et al., European Journal of Inorganic Cehmistry, 2012, 32 (7), S. 5323-5331].

Metallbeschichtete anorganische Partikel sind für den Einsatz in Metall-Matrix-Kompositen von Bedeutung. Mit Hilfe der metallbeschichteten anorganischen Partikel können die Eigenschaften der Metallmatrix, gezielt je nach Anwendungsbereich, verbessert werden.

Unbeschichtete anorganische Partikel besitzen völlig andere Oberflächeneigenschaften als die Metallmatrix, in die sie inkorporiert werden sollen. Beim Einbringen der unbeschichteten anorganischen Partikel in die Metallmatrix kommt es meist zur Agglomeration der anorganischen Partikel bzw. zur Bildung von Luftblasen und anderen Inhomogenitäten in der Matrix.

Metallbeschichtete anorganische Partikel hingegen weisen andere Oberflächenenergien auf, die ähnlicher der der Metallmatrix sind, weshalb sie sich besser in diese inkorporieren lassen.

Die Funktionalisierung von anorganischen Partikeln, besonders in karbidischer Form, für die stromlose Metallbeschichtung ist sehr herausfordernd, da sie chemisch inert sind.

Die Aufgabe der Erfindung ist es, ein Verfahren zur Aminfunktionalisierung von Oberflächen anorganischer Partikel bereit zu stellen, welche dann mittels stromloser Abscheidetechniken mit einer Metallschicht versehen werden können. Um die organischen Anteile in den metallbeschichteten Partikeln möglichst gering zu halten, sollte die organische Zwischenschicht möglichst als Monolage aufgebracht werden.

Die Aufgabe wird gelöst durch ein Verfahren zur Herstellung metallbeschichteter anorganischer Partikel mittels stromloser Abscheidetechnik, mit den Verfahrensschritten
a) Funktionalisierung anorganischer Partikel,
b) Eingeben der funktionalisierten anorganischen Partikel in eine wässrige Metallsalzlösung, enthaltend Metallionen,
c) Zugeben eines Reduktionmittels zur wässrigen Metallsalzmischung, enthaltend die funktionalisierten Partikel, zur Reduktion der Metallionen und Abscheidung eines Metalls auf den funktionalisierten Partikeln,
wobei die Funktionalisierung der Partikel nach Verfahrensschritt a) mit einer Aminophosphonsäure, einer Aminocarbonsäure und/oder einem Aminoalkoholphosphorsäureester derart erfolgt und wobei die Aminophosphonsäure, die Aminocarbonsäure und/oder der Aminoalkoholphosphorsäureester auf der Oberfläche der anorganischen Partikel eine Monolage ausbilden.

Die Partikel werden aminfunktionalisiert, um das Abscheiden verschiedener Metalle auf der Oberfläche zu begünstigen.

Bevorzugt werden die anorganischen Partikel zur Funktionalisierung mit einer Aminophosphonsäure, einer Aminocarbonsäure (auch Aminosäure genannt) und/oder einem Aminoalkoholphosphorsäureester mit einem 2- bis 1000-fachen Überschuss, besonders bevorzugt mit einem 4 bis 100-fachen Überschuss, ganz besonders bevorzugt mit einem 5 bis 10-fachen Überschuss, bezogen auf die für die Ausbildung einer Monolage benötigte Stoffmenge, behandelt.

Die für eine Monolage benötigte Stoffmenge kann aus dem Platzbedarf der funktionellen Gruppe (Phosphat) die auf die Oberfläche bindet mit etwa 4,2 nm²/Molekül und der spezifischen Oberfläche der Partikel berechnet werden. [C. J. Lomoschitz et al., Langmuir 27 (2011)3534]

Bevorzugt werden als Aminophosohonsäuren Aminophosphonsäure der allgemeinen Summenformel H₂PO₃-(CR₂)n-NH₂ mit n gleich mindestens 1, wobei die Reste R unabhängig voneinander ausgewählt sind aus bevorzugt einem Wasserstoffatom oder einer Alkylkette beliebiger Länge, welche weitere (Amin-)Funktionalitäten enthalten kann. Erfindungsgemäß bedeutet eine beliebige Länge der Alkylkette, dass diese aus bevorzugt 1 bis 10 C-Atomen, besonders bevorzugt 2 bis 5 C-Atomen und ganz besonders bevorzugt - CH₂-CH₂-, -CH₂CH₂-CH₂-, -CH₂-CH₂-CH₂-CH₂- besteht. Bevorzugt kann die Aminophosphonsäure auch aus der Gruppe der Aminobisphosphonsäuren ausgewählt werden.

Bevorzugt werden als Aminocarbonsäuren Aminocarbonsäuren der allgemeinen Struktur HOOC-(CR₂)ₙ-NH₂ mit n gleich mindestens 1, wobei die Reste R unabhängig voneinander ausgewählt sind aus bevorzugt einem Wasserstoffatom oder einer Alkylkette beliebiger Länge, welche weitere (Amin-)Funktionalitäten enthalten kann. Erfindungsgemäß bedeutet eine beliebige Länge der Alkylkette, dass diese aus bevorzugt 1 bis 10 C-Atomen, besonders bevorzugt 2 bis 5 C-Atomen und ganz besonders bevorzugt -CH₂-CH₂-, -CH₂-CH₂-CH₂-, - CH₂CH₂-CH₂-CH₂- besteht.

Bevorzugt werden als Aminoalkoholphosphorsäureester Aminoalkoholphosphorsäureester der allgemeine Struktur H₂₋ₓPO₃₋ₓ-(O(CR₂)ₙNH₂)ₓ₊₁ mit n gleich mindestens 1, wobei die Reste R unabhängig voneinander ausgewählt sind, aus bevorzugt einem Wasserstoffatom oder einer Alkylkette beliebiger Länge, welche weitere (Amin-)Funktionalitäten enthalten kann. Erfindungsgemäß bedeutet eine beliebige Länge der Alkylkette, dass diese aus bevorzugt 1 bis 10 C-Atomen, besonders bevorzugt 2 bis 5 C-Atomen und ganz besonders bevorzugt -CH₂-CH₂-, -CH₂-CH₂-CH₂-, -CH₂-CH₂-CH₂-CH₂-besteht. Bevorzugt ist x 0 bis 2, besonders bevorzugt 0 bis 1 und ganz besonders bevorzugt ist x gleich 0.

Überraschenderweise bilden sich bei der Funktionalisierung mit Aminophosphonsäuren, Aminocarbonsäuren und/oder Aminoalkoholphosphorsäureestern eine Monolage auf der Partikeloberfläche aus, was besonders vorteilhaft für eine spätere Anwendung der anorganischen Partikel ist. Monolagen bezeichnet erfindungsgemäß das Vorhandensein einer Schicht von Molekülen auf der Oberfläche, wobei die Schichtdicke ein Molekül nicht überschreitet. Erfindungsgemäß bilden sich auf den anorganischen Partikeln Monolagen aus Aminophosphonsäuren, Aminocarbonsäuren und/oder Aminoalkoholphosphorsäureestern aus. Die Schichtdicke der Monolagen aus Aminophosphonsäuren, Aminocarbonsäuren und/oder Aminoalkoholphosphorsäureester überschreitet eine Moleküllänge nicht. Bei der Verarbeitung der metallbeschichteten anorganischen Partikel in z. B. heißen Schmelzen ist es vorteilhaft, wenn so wenig wie möglich organische Bestandteile auf den anorganischen Partikeln enthalten sind, da diese gegen hohe Temperaturen und mechanische Belastung weniger stabil sind. Vorteilhaft kommt es beim Einsatz von Phosphonsäuren, Carbonsäuren und Phosphonsäureestern nicht zur Eigenkondensation der einzelnen Moleküle untereinander, was zur Folge hätte, dass sich auf den Partikeln eine Schicht mit unregelmäßiger Schichtdicke bilden würde, wie es beispielsweise aus dem Stand der Technik bei der Funktionalisierung mit Silanen bekannt ist.

Bevorzugt werden die anorganischen Partikel aus Keramiken oder Kohlenstoffpartikeln, besonders bevorzugt aus oxidischen oder karbidischen Partikeln, ganz besonders bevorzugt aus WC, Al₂O₃, SiO₂ ausgewählt. Die anorganischen Partikel können dabei annähernd kugelförmige bis sphärische Formen annehmen, auch agglomerierte anorganische Partikel und Nanorods sind eingeschlossen. Die Kohlenstoffpartikel können beispielsweise in Form von Nanotubes, Fullerenen oder Graphenen vorliegen.

Bevorzugt weisen die anorganischen Partikel eine Größe von 0,1 nm (nano-Partikel) bis 100 µm (mikro-Partikel) auf.

Bevorzugt weisen die nano-Partikel eine Größe von 1 bis 50 nm, ganz besonders bevorzugt von 10 bis 20 nm auf.

Bevorzugt weisen die mikro-Partikel eine Größe von 1 bis 50 µm, ganz besonders bevorzugt von 1 bis 5 µm auf.

Bevorzugt werden vor der Funktionalisierung der anorganischen Partikel (Verfahrensschritt a) auf der Partikeloberfläche Hydroxidgruppen mittels eines Aktivierungsreagenz generiert. Bevorzugt werden nicht oxidische Partikeloberflächen vor der Aminfunktionalisierung mittels eines Aktivierungsreagenzes behandelt. Bevorzugt ist das Aktivierungsreagenz ausgewählt aus Säuren, besonders bevorzugt aus Mineralsäuren, ganz besonders bevorzugt aus HCl, HBr, HI, HF, H₂SO₄ und HNO₃. Bevorzugt kann als Aktivierungsreagenz molekularer Sauerstoff oder Ozon eingesetzt werden.

Bevorzugt erfolgt die Funktionalisierung der anorganischen Partikel nach Verfahrensschritt a bei Temperaturen von 10 bis 40°C, besonders bevorzugt von 15 bis 30°C, ganz besonders bevorzugt von 20 bis 25°C, noch mehr bevorzugt bei Raumtemperatur.

Bevorzugt enthält die wässrige Metallsalzlösung, enthaltend Metallionen, mindestens ein Metallsalz eines Metalls ausgewählt aus Ni, Cu, Co oder Metallen der Gruppen 5, 6, 7, 8, 13, 14, 15 des Periodensystems der Elemente. Bevorzugt erfolgt die Beschichtung der aminfunktionalisierten Partikeloberflächen mittels Reduktion eines Metalls der Metallsalze oder mehrerer Metalle der Metallsalze aus wässriger Lösung und anschließender Abscheidung des Metalls oder der Metalle auf der aminfunktionalisierten Partikeloberfläche. Bevorzugt enthält die Metallsalzlösung Mischungen verschiedener Metallsalze mit verschiedenen Metallen, die bevorzugt ein ähnliches Redoxpotential aufweisen. Ein ähnliches Redoxpotential bedeutet erfindungsgemäß, dass die verschiedenen Metalle in der Metallsalzlösung mit dem gleichen Reduktionsmittel reduziert werden können.

Bevorzugt werden beim Einbringen der funktionalisierten anorganischen Partikel in eine wässrige Metallsalzlösung nach Verfahrensschritt b zusätzlich Komplexbildner einsetzt. Bevorzugt ist der Komplexbildner ausgewählt aus Ethylendiamintetraessigsäure (EDTA), Zitronensäure und deren Salze, Natriumethylendiamintetraacetat, Trieethylendiamin oder Ethylendiamin. In Abhängigkeit der eingesetzten anorganischen Partikel, des Reagenzes zur Aminfunktionalisierung und der Art der Metallsalzlösung wird der Fachmann den geeigneten Komplexbildner auswählen. Der Einsatz der Komplexbildner begünstigt das Abscheiden des Metalls auf der Partikeloberfläche, wobei verhindert wird, dass reines Metall aus dem Metallsalz abgeschieden wird.

Bevorzugt wird das Reduktionsmittel ausgewählt aus Hydrazin, Natriumborhydrid, Hypophosphit oder Wasserstoff.

Bevorzugt wird das Reduktionsmittel mit einem Überschuss der 5-fachen bis 100fachen Stoffmenge an zu reduzierendem Metallsalz, besonders bevorzugt mit einem Überschuss der 10-fachen bis 50-fachen Stoffmenge an zu reduzierendem Metallsalz eingesetzt. Bevorzugt wird dabei 90 % der Metallsalzlösung, besonders bevorzugt mehr als 99 % der Metallsalzlösung, ganz besonders bevorzugt die gesamte Metallsalzlösung reduziert.

Durch die Wahl eines geeigneten Komplexbildners werden Metallkomplexe gebildet. Auf diese Art kann das Redoxpotential sehr genau eingestellt werden. Zur Reduktion werden bevorzugt Reduktionsmittel eingesetzt deren Redoxpotential negativ genug ist, um das Metallkation aus dem jeweiligen Metallkomplex zu reduzieren. Vorzugsweise werden zur Reduktion Reduktionsmittel mit einem Redoxpotential von -1,57 bis -1,11 V, bei Cu vorzugsweise mit einem Redoxpotential von -1,20 bis -1,10 V, besonders bevorzugt Hydrazin, bei Ni, Co, Cr, Sn, Pb, Sb, Bi, Zn, Cu, Fe, Al oder Mischungen dieser vorzugsweise mit einem Redoxpotential von -1,57 bis -1,24 V, besonders bevorzugt Natriumborhydrid oder eine Mischung von Natriumborhydrid mit einem Reduktionsmittel mit einem Redoxpotential von -1,57 bis -1,11 V verwendet.

Die stromlose Abscheidung der jeweiligen Metalle erfolgt bevorzugt mittels den in der Tabelle zusammengestellten jeweiligen Reduktionsmittel, Komplexbildner und Temperaturen, soll aber nicht auf diese beschränkt werden:

| Beschichtungsmetall | Reduktionsmittel | Komplexbildner | Temperatur |
|---|---|---|---|
| Kupfer (Cu) | Hydrazin (N₂H₂) | EDTA | Raumtemperatur |
| Nickel (Ni) | Natriumborhydrid (NaBH₄) Hypophosphit | EDTA | Raumtemperatur |
| Cobalt (Co) | Natriumborhydrid (NaBH₄), Natriumhypophosphit Na(H₂PO₂) | Natriumzitrat | 60°C |
| Silber (Ag) | Kaliumnatriumtartrat (KNaC₄H₄O₆) | Ethylendiamin | Raumtemperatur |

Die metallbeschichteten anorganischen Partikel eigenen sich aufgrund der modifizierten Oberflächeneigenschaften besonders in Metall-Matrix Kompositen.

Erfindungsgemäß bezeichnen Metall-Matrix Komposite metallische Verbundwerkstoffe, die aus einer aus mindestens einem Metall bestehenden Matrix und den erfindungsgemäßen metallbeschichteten nichtmetallischen Partikeln bestehen.

Das in der Erfindung beschriebene Verfahren ermöglicht bei der Aminfunktionalisierung der Partikeloberfläche die ausschließliche Bildung von Monolagen, was besonders vorteilhaft für eine spätere Anwendung der anorganischen Partikel ist. Bei der Verarbeitung der metallbeschichteten anorganischen Partikel in z. B. heißen Schmelzen ist es vorteilhaft, wenn so wenig wie möglich organische Bestandteile auf den anorganischen Partikeln enthalten sind, da diese gegen hohe Temperaturen und mechanische Belastung weniger stabil sind. Somit ist der erfindungsgemäße Einsatz von Aminophosphonsäuren, Aminocarbonsäuren und/oder Aminoalkoholphosphorsäureestern zur Bildung von Monolagen besonders vorteilhaft, im Vergleich zu bisher bekannten Möglichkeiten die Oberfläche für die stromlose Metallabscheidung zu funktionalisieren, wie zum Beispiel die Funktionalisierung der Partikel mittels Silan-basierten Thiolen (WO 2012/072658 A2) oder Polydopamin. [G. Mondin et al., J. Colloid Interface Sci. 411 (2013) 187]

Vorteilhaft ist außerdem, dass die Aminophosphonsäuren, Aminocarbonsäuren und/oder Aminoalkoholphosphorsäureestern wesentlich länger lagerstabil sind. Im Vergleich dazu sind die in WO 2012/072658 A2 beschriebenen Mercaptoorganylsilane zur Funktionalisierung der Partikel nicht lagerstabil, da sie zur Eigenkondensation neigen.

Vorteilhaft ist zudem, dass die Abscheidung der Metalle bevorzugt bei Raumtemperatur erfolgen kann, während die Funktionalisierung mittels Mercaptoorganylsilanen nur bei erhöhten Temperaturen stattfindet.

### Ausführungsbeispiele

Anhand der aufgeführten Darstellungen und Ausführungsbeispiele soll die Erfindung näher erläutert werden ohne sie auf diese zu beschränken. Dabei zeigen
- Fig.1:: TEM-Aufnahmen (Transelektronenmikroskopie) von nano-WC Partikel ohne Aminfunktionalisierung (Fig. 1a) und mit 3-Aminopropylphosphonsäure (3-APP) funktionalisierte nano-WC Partikel (Fig. 1b).
- Fig.2:: IR-Spektren von 3-Aminopropylphosphonsäure (3-APP), unbeschichteten mikro-WC Partikeln und mikro-WC Partikel, die mit 3-Aminopropylphosphonsäure (3-APP@WC) behandelt wurden.
- Fig.3:: REM-Aufnahmen (Rasterelektronenmikroskopie) von unbehandelten und unbeschichteten WC-Partikeln, von WC-Partikeln nach der Kupferabscheidung und ein WC-Partikel nach der Nickelabscheidung.

### 1) Funktionalisierung von WC-Partikeln mittels 3-Aminopropylphosphonsäure (3-APP):

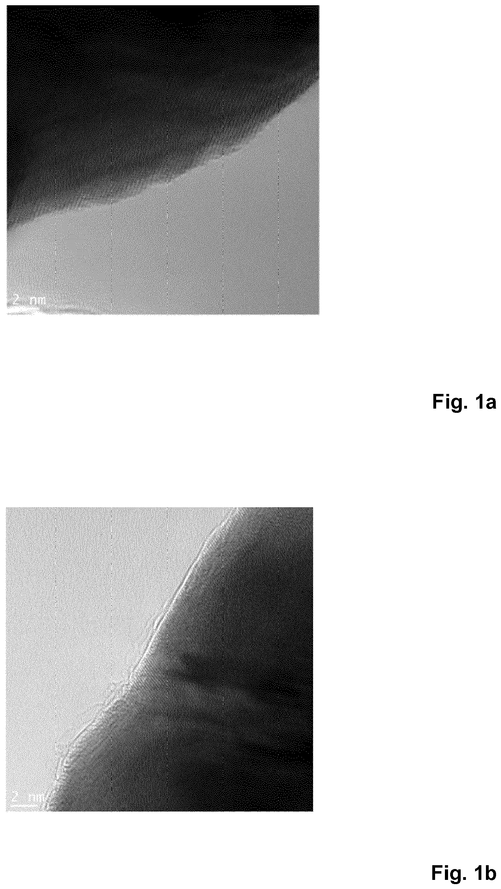

Wolframkarbid-Partikel (WC, 1µm) wurden in Salzsäure dispergiert und 1 h bei Raumtemperatur gerührt. Nach der erfolgten Aktivierung wurde ein Überschuss von 3-Aminopropylphosphonsäure 3-APP (5.10⁻³ M) zu 20 g/L Wolframkarbid-Partikel in deionisiertem Wasser gegeben und für 24 h gerührt. Überschüssiges 3-APP wurde abzentrifugiert und die funktionalisierten Partikel mehrmals mit Wasser und Ethanol gewaschen und wieder abzentrifugiert. Die erhaltenen Partikel wurden bei 40°C im Vakuum getrocknet. Fig. 1 zeigt TEM-Aufnahmen (Transelektronenmikroskopie) von nano-WC Partikel ohne Aminfunktionalisierung (Fig. 1a) und mit 3-Aminopropylphosphonsäure (3-APP) funktionalisierte nano-WC Partikel (Fig. 1b). Mit Hilfe dieser Methode kann die Aminfunktionalisierung der Partikeloberfläche untersucht werden. In Fig. 1b ist deutlich zu erkennen, dass eine Monolage aus 3-APP durch die Funktionalisierung mittels 3-APP auf der nano-WC-Partikeloberfläche gebildet wurde.

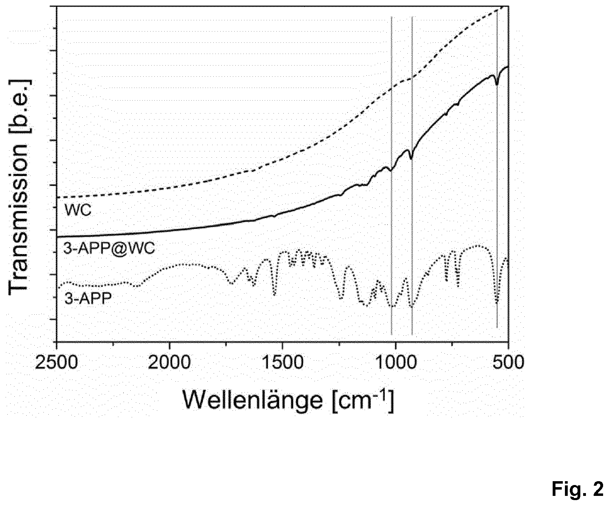

Des Weiteren kann mittels IR-Messung (Infrarotspektroskopie) nachgewiesen werden, dass die 3-Aminopropylphosphonsäure zur Aminfunktionalisierung tatsächlich an der Partikeloberfläche bindet. Fig. 2 zeigt dabei die IR-Spektren von 3-Aminopropylphosphonsäure (3-APP) als Referenz und unbeschichteten mikro-WC Partikeln (WC) im Vergleich zu mikro-WC Partikeln, die mit 3-Aminopropylphosphonsäure behandelt wurden (3-APP@WC), bei denen deutlich zu erkennen ist, dass 3-APP auf den WC-Partikeln aufgebracht ist.

### 2) Kupferabscheidung auf 3-APP-funktionalisierten WC-Partikeln

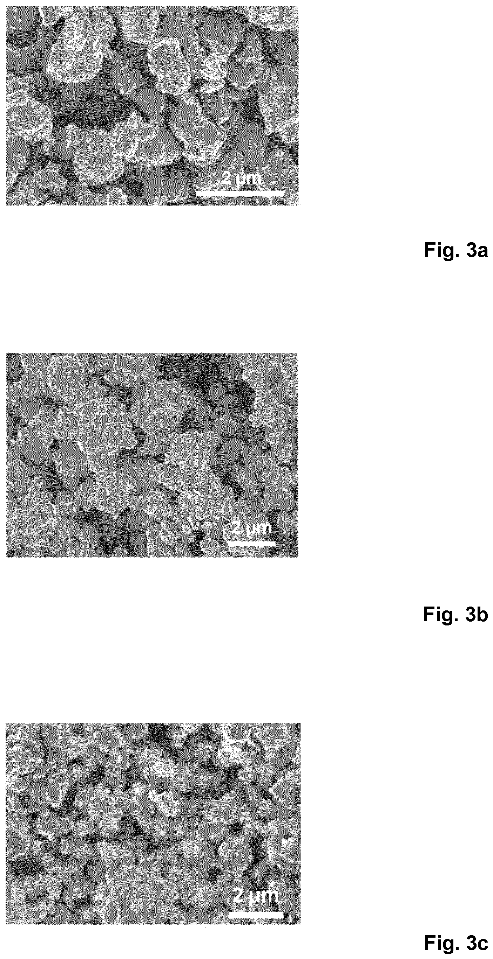

Die stromlose Abscheidung von Kupfer auf den mit 3-APP beschichteten WC-Partikeln erfolgte aus wässriger Lösung, die 7,5 g/L Kupfersulfat Pentahydrat, 5,5 g/L Natriumethylendiamintetraacetat und 10 g/L WC-Partikel enthielt. Die Partikel wurden durch Ultraschallbehandlung (5 min) dispergiert und dann 18,5 mL/L Hydrazinhydrat-Lösung (∼ 80 %) zugegeben. Nach etwa 2 h (Ende der Gasentwicklung) wurde das überschüssige Hydrazin mit Wasserstoffperoxid desaktiviert, die Partikel zunächst dekantiert, dann zentrifugiert und so lange mit Wasser und Ethanol gewaschen und zentrifugiert, bis das Waschwasser farblos war. Die erhaltenen Partikel wurden bei 40°C im Vakuum getrocknet. Die anorganischen Partikel, auf denen Kupfer abgeschieden wurde, können mittels REM (Rasterelektronenmikroskopie) untersucht werden. Fig. 3a zeigt ein WC-Partikel, welches nicht aminfunktionalisiert und nicht beschichtet ist, Fig. 3b ein WC-Partikel nach der Kupferabscheidung. Bei den kupferbeschichteten Partikeln wird die Metallbeschichtung morphologisch nachgewiesen.

### 3) Nickelabscheidung auf 3-APP-funktionalisierten WC-Partikeln

Die stromlose Abscheidung von Nickel auf den mit 3-APP beschichteten WC-Partikeln erfolgte aus wässriger Lösung, die Nickel(II)chlorid Hexahydrat 10 g/L und WC-Partikel 10 g/L enthielt. Die Partikel wurden durch Ultraschallbehandlung (5 min) dispergiert und dann 3,4 g/L Natriumborhydrid zugegeben. Nach erfolgter Beschichtung wurden die Partikel zunächst dekantiert, dann zentrifugiert und so lange mit Wasser und Ethanol gewaschen und zentrifugiert, bis das Waschwasser farblos war. Die erhaltenen Partikel wurden bei 40°C im Vakuum getrocknet.
Die so beschichteten Partikel enthielten 42 Massen-% Nickel.

Die anorganischen Partikel, auf denen Nickel abgeschieden wurde, können mittels REM (Rasterelektronenmikroskopie) untersucht werden. Fig. 3a zeigt ein WC-Partikel, welches nicht aminfunktionalisiert und nicht beschichtet ist, Fig. 3c ein WC-Partikel nach der Nickelabscheidung. Bei den nickelbeschichteten Partikeln wird die Metallbeschichtung morphologisch nachgewiesen.

### 4) Alternative Nickelabscheidung auf 3-APP-funktionalisierten WC-Partikeln

Die stromlose Abscheidung von Nickel auf den mit 3-APP beschichteten WC-Partikeln erfolgte aus wässriger Lösung, die Nickel(II)chlorid-Hexahydrat, 16 g/L Natriumethylendiamintetraacetat, Natriumborhydrid und WC-Partikel enthielt. Die Partikel wurden durch Ultraschallbehandlung 5 min dispergiert. Nach erfolgter Beschichtung wurden die Partikel zunächst dekantiert, dann zentrifugiert und so lange mit Wasser und Ethanol gewaschen und zentrifugiert, bis das Waschwasser farblos war. Die erhaltenen Partikel wurden bei 40°C im Vakuum getrocknet.
Die so beschichteten Partikel enthielten 20 Massen-% Nickel.

Die nickelbeschichteten Partikel können analog Beispiel 3 mittels REM untersucht werden. Eine Nickelabscheidung ist auch bei diesen Partikeln morphologisch nachweisbar.

Die metallbeschichteten anorganischen Partikel können optisch, hinsichtlich der Farbe beurteilt werden. Während die unbehandelten anorganischen Partikel von weiß, über anthrazit bis braun sind, weisen sie nach der Metallabscheidung (Co, Ni) eine schwarze Farbe auf.

## Patentansprüche

1. Verfahren zur Herstellung metallbeschichteter anorganischer Partikel mittels stromloser Abscheidetechnik mit folgenden Verfahrensschritten:
a) Funktionalisierung der anorganischer Partikel,
b) Einbringen der funktionalisierten Partikel in eine wässrige Metallsalzlösung, enthaltend Metallionen,
c) Zugabe eines Reduktionmittels zur wässrigen Metallsalzmischung, enthaltend die funktionalisierten Partikel, zur Reduktion der Metallionen und Abscheidung eines Metalls auf den funktionalisierten Partikeln,
**dadurch gekennzeichnet, dass** die Funktionalisierung der Partikel nach Verfahrensschritt a) mit einer Aminophosphonsäure, einer Aminocarbonsäure und/oder einem Aminoalkoholphosphorsäureester erfolgt, wobei die Aminophosphonsäure, die Aminocarbonsäure und/oder der Aminoalkoholphosphorsäureester auf der Oberfläche der anorganischen Partikel eine Monolage ausbilden.

2. Verfahren nach Anspruch 1, **dadurch gekennzeichnet, dass** die anorganischen Partikel aus Keramiken oder Kohlenstoffpartikeln ausgewählt werden.

3. Verfahren nach einem der Ansprüche 1 oder 2, **dadurch gekennzeichnet, dass** die anorganischen Partikel eine Größe von 0,1 bis 100 µm aufweisen.

4. Verfahren nach einem der Ansprüche 1 bis 3, **dadurch gekennzeichnet, dass** vor der Funktionalisierung der anorganischen Partikel auf der Partikeloberfläche Hydroxidgruppen mittels eines Aktivierungsreagenzes generiert werden.

5. Verfahren nach einem der Ansprüche 1 bis 4, **dadurch gekennzeichnet, dass** die Funktionalisierung der anorganischen Partikel bei Temperaturen im Bereich von 10 bis 40 °C erfolgt.

6. Verfahren nach einem der Ansprüche 1 bis 5, **dadurch gekennzeichnet, dass** die wässrige Metallsalzlösung mindestens ein Metallsalz eines Metalls ausgewählt aus Ni, Cu, Co oder Metallen der Gruppen 5, 6, 7, 8, 13, 14, 15 des Periodensystems der Elemente enthält.

7. Verfahren nach einem der Ansprüche 1 bis 6, **dadurch gekennzeichnet, dass** beim Einbringen der funktionalisierten anorganischen Partikel in eine wässrige Metallsalzlösung zusätzlich einen Komplexbildner eingesetzt wird.

8. Verfahren nach einem der Ansprüche 1 bis 7, **dadurch gekennzeichnet, dass** das Reduktionsmittel ausgewählt wird aus Hydrazin, Natriumborhydrid, Hypophosphit oder Wasserstoff.

9. Metallbeschichtete anorganische Partikel, wobei die Metallschicht auf einer Monolage aus Aminophosphonsäure, einer Aminocarbonsäure und/oder einem Aminoalkoholphosphorsäureester abgeschieden ist.

10. Verwendung der metallbeschichteten anorganischen Partikel hergestellt nach einem Verfahren der Ansprüche 1 bis 8 oder nach Anspruch 9 in Metall-Matrix Kompositen.

## Claims

1. A process for producing metal-coated inorganic particles by means of currentless deposition technique with the following process steps:
a) functionalization of the inorganic particles,
b) introducing the functionalized particles into an aqueous metal-salt solution containing metal ions,
c) adding a reducing agent to the aqueous metal-salt mixture containing the functionalized particles for reduction of the metal ions and deposition of a metal on the functionalized particles,
**characterized in that** the functionalization of the particles according to process step a) takes place with an aminophosphonic acid, an aminocarboxylic acid and/or an aminoalcohol phosphoric acid ester, wherein the aminophosphonic acid, the aminocarboxylic acid and/or the aminoalcohol phosphoric acid ester form(s) a monolayer on the surface of the inorganic particles.

2. The process according to Claim 1, **characterized in that** the inorganic particles are selected from ceramics or carbon particles.

3. The process according to any one of Claims 1 or 2, **characterized in that** the inorganic particles are from 0.1 to 100 µm in size.

4. The process according to any one of Claims 1 to 3, **characterized in that** hydroxide groups are generated by means of an activating reagent before functionalization of the inorganic particles on the particle surface.

5. The process according to any one of Claims 1 to 4, **characterized in that** the functionalization of the inorganic particles takes place at temperatures in the range of 10 to 40°C.

6. The process according to any one of Claims 1 to 5, **characterized in that** the aqueous metal-salt solution contains at least one metal salt of a metal selected from Ni, Cu, Co or metals of the groups 5, 6, 7, 8, 13, 14, 15 of the periodic system of elements.

7. The process according to any one of Claims 1 to 6, **characterized in that** a complexing agent is also used in introducing the functionalized inorganic particles into an aqueous metal-salt solution.

8. The process according to any one of Claims 1 to 7, **characterized in that** the reducing agent is selected from hydrazine, sodium borohydride, hypophosphite or hydrogen.

9. Metal-coated inorganic particles, wherein the metal layer is deposited on a monolayer of an aminophosphonic acid, an aminocarboxylic acid and/or an aminoalcohol phosphoric acid ester.

10. The use of the metal-coated inorganic particles produced according to any process of Claims 1 to 8 or according to Claim 9 in metal-matrix composites.

## Revendications

1. Procédé de production de particules inorganiques revêtues de métal par des techniques de dépôt autocatalytique, avec les étapes de procédé suivantes :
a) la fonctionnalisation des particules inorganiques,
b) l'introduction des particules fonctionnalisées dans une solution aqueuse de sel métallique contenant des ions métalliques,
c) l'ajout d'un agent réducteur au mélange aqueux de sel métallique contenant les particules fonctionnalisées pour la réduction des ions métalliques et le dépôt d'un métal sur les particules fonctionnalisées,
**caractérisé en ce que** la fonctionnalisation des particules selon l'étape de procédé a) a lieu avec un acide aminophosphonique, un acide aminocarboxylique et/ou un ester d'acide phosphorique amino-alcoolique, l'acide aminophosphonique, l'acide aminocarboxylique et/ou l'ester d'acide phosphorique amino-alcoolique formant une monocouche sur la surface des particules inorganiques.

2. Procédé selon la revendication 1, **caractérisé en ce que** les particules inorganiques sont choisies parmi les céramiques ou les particules de carbone.

3. Procédé selon l'une des revendications 1 ou 2, **caractérisé en ce que** les particules inorganiques présentent une taille de 0,1 à 100 µm.

4. Procédé selon l'une des revendications 1 à 3, **caractérisé en ce que** des groupes hydroxyde sont générés sur la surface des particules au moyen d'un réactif d'activation avant la fonctionnalisation des particules inorganiques.

5. Procédé selon l'une des revendications 1 à 4, **caractérisé en ce que** la fonctionnalisation des particules inorganiques a lieu à des températures comprises entre 10 et 40 °C.

6. Procédé selon l'une des revendications 1 à 5, **caractérisé en ce que** la solution aqueuse de sel métallique contient au moins un sel métallique d'un métal choisi parmi Ni, Cu, Co ou les métaux des groupes 5, 6, 7, 8, 13, 14, 15 du tableau périodique des éléments.

7. Procédé selon l'une des revendications 1 à 6, **caractérisé en ce qu'**un agent complexant est en outre utilisé lors de l'introduction des particules inorganiques fonctionnalisées dans une solution aqueuse de sel métallique.

8. Procédé selon l'une des revendications 1 à 7, **caractérisé en ce que** l'agent réducteur est choisi parmi l'hydrazine, le borohydrure de sodium, l'hypophosphite ou l'hydrogène.

9. Particules inorganiques revêtues de métal, la couche métallique étant déposée sur une monocouche d'acide aminophosphonique, d'un acide aminocarboxylique et/ou d'un ester d'acide phosphorique amino-alcoolique.

10. Utilisation des particules inorganiques revêtues de métal préparées selon un procédé selon les revendications 1 à 8 ou selon la revendication 9 dans des composites à matrice métallique.
